# EUROPEAN PATENT APPLICATION

(11) **EP 4 588 413 A1**
(43) Date of publication of application: **23.07.2025**
(21) Application number: 24177368.8
(22) Date of filing: 22.05.2024
(51) Int. Cl.: A47K 13/10, A47K 13/24, E03D 5/10, G01S 13/56

(54) **AN INTELLIGENT WALL-MOUNTED TOILET**

(30) Priority: 17.01.2024 CN 202420118318 U
(71) Applicant: Geberit International AG, 8645 Jona (CH)
(72) Inventor: YANG, Jiahao, Shanghai, 201802 (CN); DAI, Cong, Shanghai, 201802 (CN); YOU, Hang, Shanghai, 201802 (CN)
(74) Representative: Szynka Smorodin Patentanwälte Partnerschaft mbB

(57) **Abstract**

The present invention relates to a toilet, especially to an intelligent wall-mounted toilet, comprising a fixed support assembly, an enclosure, a toilet body, an upper cover and a toilet seat. The upper cover and the toilet seat are connected above the toilet body rotatably through a hinge structure. The enclosure is provided above the toilet body. A master control system is provided inside the enclosure. The fixed support assembly is provided at the back of the enclosure and the toilet body to install the toilet on the wall by suspension. A M-ATX mainboard, a first motor element and a second motor element are provided inside the enclosure. A microwave sensor is provided on one side of the second motor element. A laser sensor is provided at the bottom of the toilet body. The present invention increases the mounting height of the microwave sensor in the enclosure, increases the sensing height of the microwave sensor accordingly, provides strong and weak sensing areas and matches the moving speed of an object so as to accurately recognize the human motion and pet motion.

## Description

### Field of technology

The present invention relates to a toilet, especially to an intelligent wall-mounted toilet.

### Background technology

With the rapid development of the economy and the increase of people's incomes, consumers have attached importance to the quality of life and smart sanitary ware has entered into more and more families. In particular, smart toilets have gained more and more popularity in households, upscale hotels and other places, because they can automatically open or close a toilet seat cover or toilet seat by detecting human signals with sensing equipment, etc.

Modern life has seen an increase in the number of families with pets. Automatic flip-top toilets in the prior art open or close a toilet seat cover and a toilet seat automatically by detecting the motion or heat of an object by using a sensor, which often opens a toilet seat cover or toilet seat when detecting a pet in no need of a toilet, thus causing confusion in the recognition system and also consuming excess power. Wall-mounted toilets leave some space underneath the bottom, and pets can also pass underneath or sleep at the bottom of a toilet, which can also cause the toilet seat cover to open improperly.

### Content of invention

The present invention provides an intelligent wall-mounted toilet, which can effectively differentiate between humans and pets when they pass by an intelligent toilet, detect a human body more accurately in order to automatically open the upper cover and/or the toilet seat, without opening the upper cover and/or the toilet seat improperly due to the detection of pets.

To this end, the present invention provides a toilet along claim 1, preferred embodiments being defined in the dependent claims. In a particular embodiment an intelligent wall-mounted toilet comprises a fixed support assembly, an enclosure, a toilet body, an upper cover and a toilet seat. The upper cover and the toilet seat are connected above the toilet body rotatably through a hinge structure. The enclosure is provided above the toilet body. A master control system is provided inside the enclosure. The fixed support assembly is provided at the back of the enclosure and the toilet body to install the toilet on the wall by suspension. A M-ATX mainboard, a first motor element and a second motor element are provided inside the enclosure. A microwave sensor is provided on one side of the second motor element. A laser sensor is provided at the bottom of the toilet body. The master control system receives signals from the microwave sensor and the laser sensor, and transmits the processed signals to the M-ATX mainboard. The M-ATX mainboard drives the first motor element and the second motor element, thus to open or close the toilet seat and upper cover.

Furthermore, the first motor element, the second motor element and the M-ATX mainboard can be screwed into the enclosure. The microwave sensor can be fixed on one side of the second motor element, increasing the mounting position of the microwave sensor by screw fixation.

Furthermore, the microwave sensor can be mounted at a first position. The first position enables the microwave sensor to form a central detection angle in a range of 35°~40° vertically from the horizontal ground, a maximum detection radius in a range of 0.5m-1.5m, and a minimum detection height in a range of 0.5m~0.89m.

Furthermore, the microwave sensor can be mounted at a preferred first position. The preferred first position enables the microwave sensor to form a central detection angle of 37.5° vertically from the horizontal ground, a maximum detection radius of 1 m, and a minimum detection height of 0.61m.

Preferably, there is a strong detection area as regards a vertical detection angle range of e.g. 15°, respectively, to both the upper and lower sides from the central detection angle, and a weak detection area there beyond. The weak detection area can have a complete vertical angular width of e.g. 43°, the width of e.g. 30° of the strong detection area being included therein. Further, also the radial detection range between a radius of e.g. 1m and 1.5m can belong to the weak detection area.

Furthermore, an area within the maximum detection radius of e. g. 1m and within a horizontal detection angle range of e.g. up to 30°, respectively, to both left and right sides from the horizontal central axis of the microwave sensor can be a strong detection area. However, an area with the detection radius range between e. g. 1m~1.5m and/or the detection angle of 30° to 58° to either side from the horizontal central axis of the microwave sensor can be a weak detection area.

Preferably the toilet is set such that when an object passes by at a speed of e.g. at least 15cm/s in the strong detection area, the microwave sensor will transmit a signal to the master control system which causes an automatic opening of the upper cover. Preferably the toilet is set such that when an object passes by at a speed of e.g. at least 25cm/s in the weak detection area, the microwave sensor will transmit a signal to the master control system which causes an automatic opening of the upper cover.

Furthermore, preferably the master control system is set such that if the upper cover is in a non-open state, the detection signal from the laser sensor cannot open the toilet seat.

Furthermore, an elastic support bracket with adjustable angles can be adopted at the mounting positions of the microwave sensor and the laser sensor, and the sensing angle of the microwave sensor and sensing distance of the laser sensor can be controlled by a remote controller.

The beneficial effects of the present invention are:
1) The present invention increases the mounting height of the microwave sensor in the enclosure, increases the sensing height of the microwave sensor accordingly, provides strong and weak sensing areas and uses the moving speed of an object so as to accurately recognize the human motion and pet motion.
2) It is possible to adjust the detection angle and of the microwave sensor and the detection distance of the laser sensor with a remote controller, and further optimize the detection accuracy in pets of different types.

### Description of drawings

Other features, purposes and advantages of the present invention will become more apparent by reading a detailed description of the non-restrictive embodiments with reference to the following accompanying drawings:
- FIG. 1: is a side view schematic diagram of the smart toilet in the embodiment of the present invention , a cover being removed;
- FIG. 2: is a perspective view of the smart toilet in the embodiment of the present invention;
- FIG. 3: is a internal perspective view into the enclosure in the embodiment of the present invention, a master control system being removed;
- FIG. 4: is a schematic diagram of the microwave sensor detection area in vertical direction in the embodiment of the present invention;
- FIG. 5: is a schematic diagram of the microwave sensor detection area in horizontal direction in the embodiment of the present invention;
- FIG. 6: is a working principle flow chart of automatic toilet cover opening in the embodiment of the present invention;

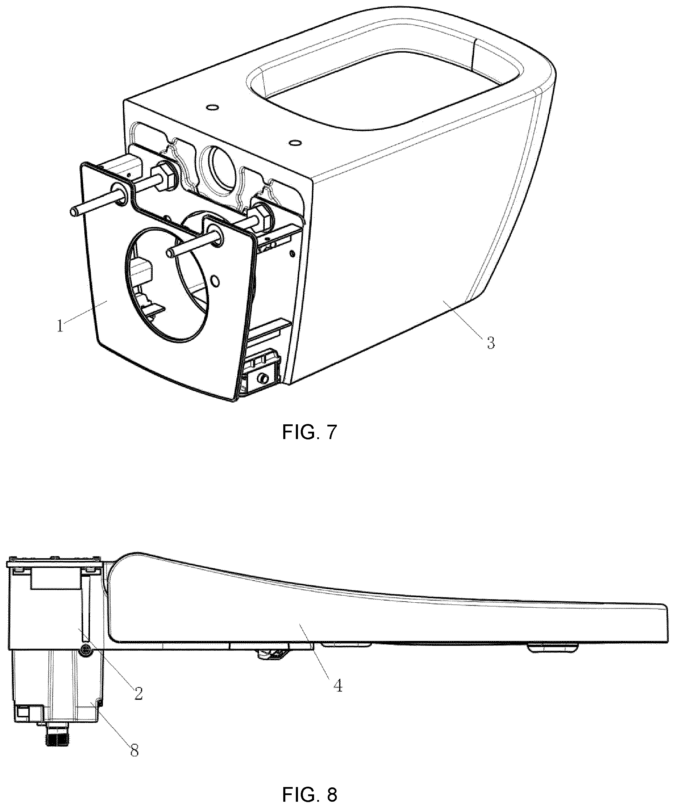

- FIG. 7: is a perspective view of the toilet body in the embodiment of the present invention;
- FIG. 8: is a side view of the enclosure and the upper cover in the embodiment of the present invention.

Description of the markings: 1. fixed support assembly; 2. enclosure; 3. toilet body; 4. upper cover; 5. toilet seat; 6. hinge structure; 7. M-ATX mainboard; 8. master control system; 9. first motor and damping element; 10. second motor and damping element; 11. microwave sensor; 12. laser sensor; 13. remote controller.

### Detailed description of the preferred embodiments

A detailed description is further made to the present invention below in combination with the drawings.

Other embodiments of the present invention will readily come to mind to those skilled in the art upon considering the specification and practicing the invention disclosed herein. The specification and embodiments are exemplary only, and the scope of the present invention is indicated by the Claims.

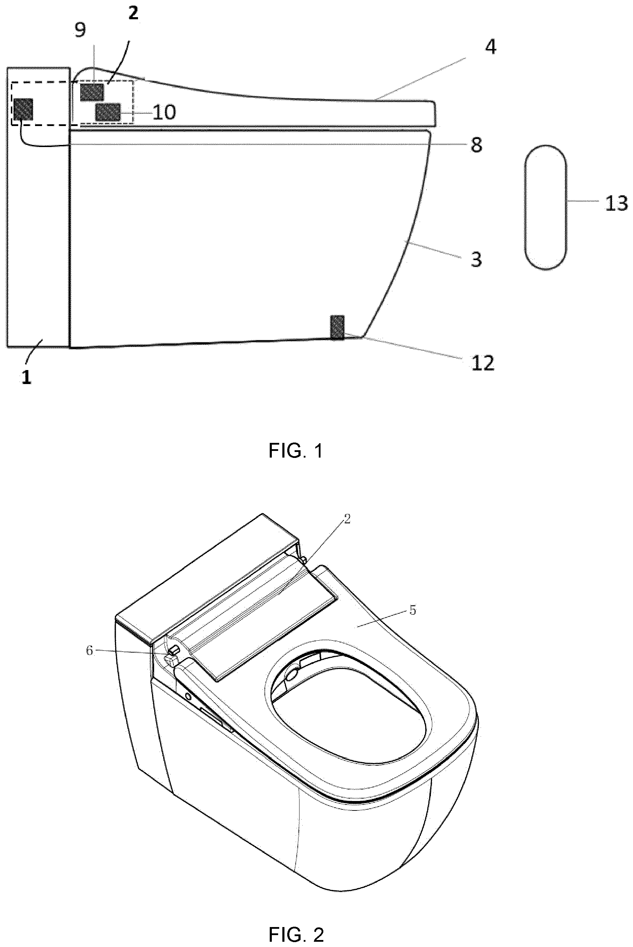

As shown in FIGS. 1, 2 and 3, an intelligent wall-mounted toilet comprises a fixed support assembly 1, an enclosure 2, a toilet body 3, an upper cover 4 and a toilet seat 5. The upper cover 4 and the toilet seat 5 are connected above the toilet body 3 rotatably through a hinge structure 6. The enclosure 2 is provided above the toilet body 3. A master control system 8 is provided inside the enclosure 2. The fixed support assembly 1 is provided at the back of the enclosure 2 and the toilet body 3 to install the toilet on the wall by suspension. A M-ATX mainboard 7, a first motor and damping element 9 and a second motor and damping element 10 are provided inside the enclosure 2. A microwave sensor 11 is provided on one side of the second motor and damping element 10. A laser sensor 12 is provided at the bottom of the toilet body 3. The master control system 8 receives signals from the microwave sensor 11 and the laser sensor 12, and transmits the processed signals to the M-ATX mainboard 7. The M-ATX mainboard 7 drives the first motor and damping element 9 and the second motor and damping element 10, thus to open or close the toilet seat 5 and the upper cover 4. In the present embodiment, the toilet is a wall-mounted toilet and fixed to the wall by the fixed support assembly 1 provided at the back of the toilet body 3. The water tank is moved inside the wall. The bottom of the toilet does not stand on the floor, and is in a suspended state, which is more flexible in comparison with traditional floor-standing toilet installation. Each component of the enclosure 2 in the intelligent toilet is connected electrically and connected to a power supply. The enclosure extends above the fixed support assembly from above the toilet body. The control system is provided in the enclosure above the fixed support assembly. The fixed support assembly is externally cladded with a ceramic package, and of course other packages may be selected for cladding, with no restrictions made herein. The first motor and damping element 9 is used to control the toilet seat 5 and the second motor and damping element 10 is used to control the upper cover 4.

In addition, the sensing range of the microwave sensor 11 is divided into horizontal and vertical angle ranges. There is a strong detection area and a weak detection area in the horizontal and vertical angle ranges. The signal strength is high in the strong detection area and low in the weak detection area. For the speeds of an object in different areas, the signal reflection energy is different. In the weak detection area, a higher speed is required in order to detect a signal. The intelligent toilet hardware comprises a microwave sensor 11, a laser sensor 12, a master control system 8, a M-ATX mainboard 7 and amotor and damping element. The microwave sensor 11 receives a signal when a human body approaches the intelligent toilet, and transmits the signal to the master control system 8. The master control system 8 processes the signal status and transmits it to the M-ATX mainboard 7. The M-ATX mainboard 7 drives and controls the second motor and damping element 10 of the upper cover 4 to open the upper cover 4 of the intelligent toilet. In this case, if a user needs to open the toilet seat 5, the laser sensor 12 will receive a kick signal, and transmit the signal to the master control system 8. The master control system 8 processes the signal status and transmits it to the M-ATX mainboard 7. The M-ATX mainboard 7 drives and controls the first motor and damping element 9 of the upper cover 4 to open the toilet seat 5.

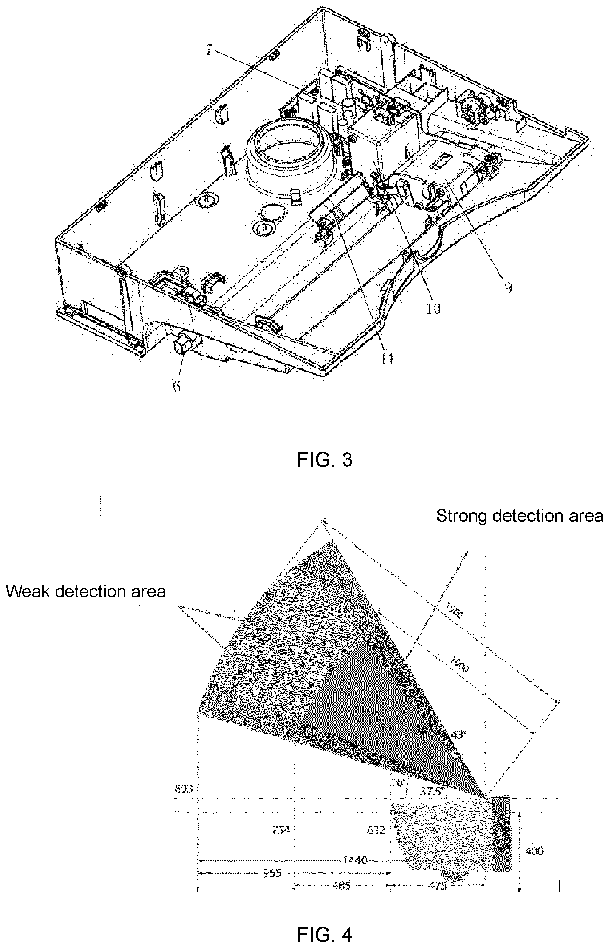

As shown in FIG. 3, furthermore, the first motor and damping element 9, the second motor and damping element 10 and the M-ATX mainboard 7 are screwed into the enclosure 2. The microwave sensor 11 is fixed on one side of the second motor and damping element 10, increasing the mounting position of the microwave sensor 11 by screw fixation. In the present embodiment, to avoid detecting a smaller pet, the microwave sensor 11 shall increase its minimum detection height to over 0.5m, and the microwave sensor 11 shall be installed outside the second motor and damping element 10. Screw fixation can not only simplify the mounting structure of the microwave sensor 11, but also further increase the detection height of the microwave sensor 11 and improve the accuracy in pet detection and recognition.

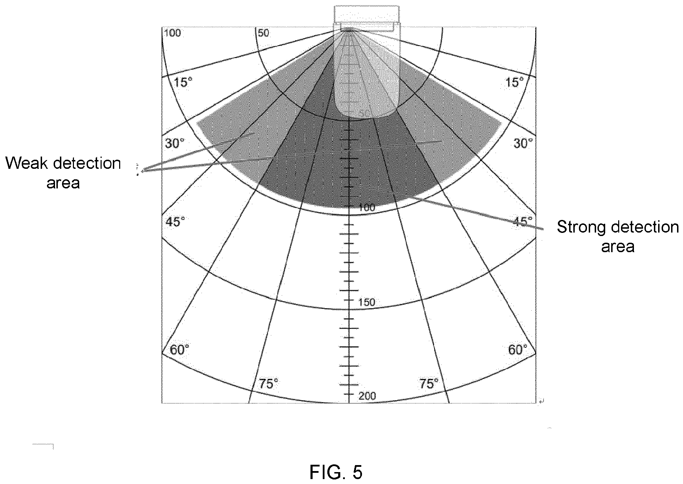

As shown in FIGS. 4 and 5, furthermore, the microwave sensor 11 is mounted at a first position. The first position enables the microwave sensor 11 to form a central vertical detection angle in a range of 35°to 40° from the horizontal ground, a detection radius range of 0.5m-1.5m, and a minimum detection height range of 0.5m to 0.89m. In the present embodiment, this mainly aims to limit the detection range of the microwave sensor 11, which can effectively filter the probability of smaller-sized pets being recognized by the microwave sensor 11 and improve the accuracy in human body recognition.

In particular, the microwave sensor 11 is mounted at a preferred first position. This first position enables the detection center line of the microwave sensor 11 to form an angle of 37.5° from the horizontal ground, a strong detection radius of 1m, and a minimum detection height of 0.61m. In the present embodiment, the total vertical detection angle range of the microwave sensor 11 itself is a 43° sector. The angle between the detection center line of the microwave sensor 11 from the horizontal ground is 37.5° upon installation. The software is set such that the microwave sensor 11 can receive an approaching signal within a range of 1m to cause an automatic opening. As shown in FIG. 4, the distance between the lowest point of the total vertical detection angle range of the microwave sensor 11 near the edge of the toilet body 3 and the ground level is 612mm. It is impossible to detect energy feedback when a pet lower than 612mm moves within the sensing radius, thus avoiding false triggering of pet movement leading to automatic opening of the upper cover 4.

As shown in FIG. 4, the total vertical detection angle range comprises a central part of 30°, namely 15° to the upper and to the lower side of the detection center line shown in FIG. 4, being a strong detection area as explained below. Further, there is a weak detection area outside thereof in the vertical sense of FIG. 4, namely with a width of 43°. Further, the radial range between 1m and 1.5m is a part of the weak detection area in the complete angle width of 43° as shown in FIG. 4. As regards the meaning of the strong and weak detection areas, the same applies as explained below.

As shown in FIG. 5, furthermore, an area within the detection radius range of 1m and the horizontal detection angle range of up to 30°, respectively, to both sides from the horizontal central axis of the microwave sensor is a strong detection area. Preferably, the toilet is set such that the microwave sensor 11 senses an object passing by at a speed of at least 15cm/s, the microwave sensor 11 will transmit a signal to cause the master control system 8 to automatically open the upper cover 4. An area within a detection radius range of 1m~1.5m and/or the detection angle of 30° to 58° to either side from the horizontal central axis of the microwave sensor is a weak detection area. Preferably, the toilet is set such that if the microwave sensor 11 senses an object passing by at a speed of at least 25cm/s, the microwave sensor 11 will transmit a signal to cause the master control system 8 to automatically open the upper cover 4.

In the present embodiment, as shown in FIG. 5, the horizontal strong detection angle range of the microwave sensor 11 is 60° wide, the strong detection radius of the microwave sensor 11 being up to 1m. When a pet approaches the toilet in the strong detection area, it can be detected only when the speed is at least 15cm/s. When an object approaches the toilet in the weak detection area, it can be detected only when the speed is at least 25cm/s. If the speed of a pet higher than the height limits is lower than the set value in the strong/weak detection area, it will not be recognized by the microwave sensor 11.

Furthermore, the master control system 8 is set such that when the upper cover 4 is in a non-open state, the detection signal from the laser sensor 12 cannot open the toilet seat 5. In the present embodiment, when the upper cover 4 is not opened, it is thus possible that a pet could burrow into the bottom of the suspended toilet and thus be recognized by the laser sensor 12. Such a case shall be set as a signal feedback to the master control system 8. The master control system 8 processes the signal as not to open the toilet seat or toilet seat cover.

Furthermore, an elastic support bracket with adjustable angles is adopted at the mounting position of the microwave sensor 11 and controls the sensing angle of the microwave sensor 11 through a remote controller 13. Due to the different types of pets in each household, some households may keep large dogs, whose height may be higher than 1m. It is thus possible to improve the mounting orientation of the microwave sensor 11, making it possible to adjust the minimum detection altitude to avoid improper large pet recognition. There are also smart toilets that have different settings for the wall-mounted installation height. In this case, the laser sensor 12 is provided with an distance adjustable structure, which can adapt to different installation environments. Moreover, this mounting structure also links up with the remote controller 13, which can facilitate a user to adjust its detection range with the remote controller 13, thus solving problems including toilet arrangement in a bathroom and limited toilet installation height.

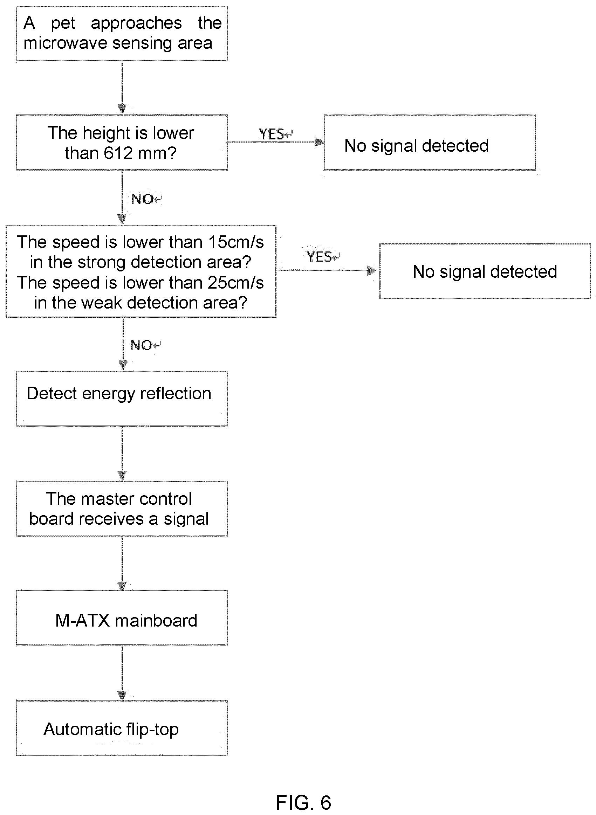

As shown in FIG. 6, the working principle in the present embodiment is: when an object approaches the microwave sensing area, it is relevant whether the height of the object is lower than 612mm. If it is lower than 612mm, the microwave sensor will not detect a signal. If it is higher than 612mm, then it is necessary to determine whether the speed of the object is lower than 15cm/s in the strong detection area or lower than 25cm/s in the weak detection area. Below such a speed, the microwave sensor will not detect a signal. Contrarily, it is possible to detect the energy reflection of the object and transmit the signal to the master control system. The master control system then sends a command to the M-ATX mainboard and the M-ATX mainboard enables the motor and damping element to open the upper cover. If the object is detected at the bottom of the toilet body, the microwave sensor fails to detect the object and only the laser sensor detects the object, and thus the master control system will not control to open the toilet seat.

It should be understood that the present invention is not limited to the precise structure that has been described above and illustrated in the drawings, and that various modifications and changes may be made.

## Claims

1. A toilet comprising a toilet body (3), an upper cover and a toilet seat (5), the upper cover and the toilet seat (5) being connected to the toilet body (3) by a hinge structure (6), and further comprising a master control system (8), a motor element (10) and a sensor (11),
the master control system (8) being adapted to receive signals from the sensor (11) and to cause said motor element (10) to open the upper cover in response to the signals,
wherein the sensor (11) is mounted to have a minimum detection height in a range of 0.5 m to 0.89 m.

2. The toilet of claim 1, wherein the sensor (11) is mounted to have a central detection line forming an angle to a horizontal direction in a range of 35° to 40° vertically, and preferably to have a total vertical detection angle range of between 30° and 58°.

3. The toilet of claim 1 or 2, wherein the sensor (11) has a total detection radius of between 1 m and 2 m.

4. The toilet of one of the preceding claims, wherein the sensor (11) has a central detection line forming an angle to a horizontal line of between 36.5 to 38.5 and a minimum detection height of between 0.55 m to 0.7 m.

5. The toilet, according to one of the preceding claims, wherein the sensor (11) is a microwave sensor.

6. The toilet of one of the preceding claims wherein the sensor (11) has, as regards the vertical detection angles thereof, a strong detection angle arranged around a central detection line and, outside thereof as regards the vertical angle, a weak detection angle range, the toilet being adapted to that moving objects are detected within the strong detection angle range from a first lower speed limit on and within the weak detection angle range from a second lower speed limit on, being larger than the first lower speed limit.

7. The toilet of claim 6, wherein the sensor (11), as regards its detection distance, has a strong detection radius range and, outside thereof, a weak detection radius range, the toilet being adapted to that moving objects are detected within the strong detection radius range from a first lower speed limit on and within the weak detection radius range from a second lower speed limit on, being larger than the first lower speed limit.

8. The toilet of claim 6 or claim 7, the first lower speed limit being at 15 cm/s, the second lower speed limit being at 25 cm/s.

9. The toilet of one of the preceding claims wherein the sensor (11) is mounted in an adjustable support being adjustable as regards the orientation of the sensor (11) and, thus, the detection angle range thereof and being controllable preferably by a remote controller (13).

10. The toilet of one of the preceding claims comprising a further sensor (12), preferably a laser sensor, at a bottom of the toilet body (3) and a further motor element (9), this further motor element (9) being the first motor element (9) and the motor element of claim 1 being the second motor element (10), the master control system (8) being adapted to receive signals from the further sensor (12) and to cause the first motor element (9) to open a toilet seat (5) of the toilet in response to the signals.

11. The toilet of claim 10, wherein the further sensor (12) is adjustable as regards its sensing distance, preferably by a remote controller (13), preferably the remote controller (13) of claim 9.

12. The toilet of one of the preceding claims wherein the sensor (11) of claim 1 is mounted on one side of the second motor element (10), preferably by screw fixation.

13. The toilet of one of the preceding claims comprising an enclosure (2) above the toilet body (3), the second motor element (10) and, if any, the first motor element (9) and the sensor (11) of claim 1 being arranged inside the enclosure (2).

14. The toilet of one of the preceding claims, being a wall-mounted toilet comprising a fixed support assembly (1) for holding the toilet on the wall by suspension, the support assembly (1) being provided at the back of the enclosure (2), if any.

15. The toilet of one of the preceding claims comprising a M-ATX mainboard (7) being adapted to drive the second motor element (10) and, if any, the first motor element (9), the M-ATX mainboard (7) being arranged in the enclosure (2) of claim 13, if any.
